(19) 

**Europäisches Patentamt**
**European Patent Office**
**Office européen des brevets**

(11) **EP 4 711 081 A1**

(12) **EUROPEAN PATENT APPLICATION**
published in accordance with Art. 153(4) EPC

(43) Date of publication:
**18.03.2026 Bulletin 2026/12**

(21) Application number: **23941243.0**

(22) Date of filing: **28.09.2023**

(51) International Patent Classification (IPC):
***B24B 19/00*** *(2006.01)*

(52) Cooperative Patent Classification (CPC):
**B24B 19/00**

(86) International application number:
**PCT/CN2023/122793**

(87) International publication number:
**WO 2024/255019 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2023 CN 202321536359 U
15.06.2023 CN 202310713173**

(71) Applicant: **SpeedBot Robotics Co., Ltd
Changsha, Hunan 410100 (CN)**

(72) Inventors:
• **DENG, Junjie**
  **Changsha, Hunan 410100 (CN)**
• **YANG, Dong**
  **Changsha, Hunan 410100 (CN)**
• **DENG, Wenping**
  **Changsha, Hunan 410100 (CN)**

(74) Representative: **Murgitroyd & Company
165-169 Scotland Street
Glasgow G5 8PL (GB)**

(54) **LACQUER SURFACE DEFECT DETECTION AND POLISHING SYSTEM AND METHOD**

(57) A paint surface defect detection and grinding system is provided, including: a defect detection device, which is provided at a defect detection station; a defect grinding device, which is provided at a defect grinding station, the defect grinding station being a downstream station of the defect detection station; and a control device, which is connected to the defect detection device and the defect grinding device. The control device is configured to control the defect detection device to perform paint surface defect detection on a target object to obtain a paint surface defect of the target object and a defect position of the paint surface defect. The control device is also configured to control the defect grinding device to grind the paint surface defect based on the defect position.

FIG. 1

## Description

## CROSS REFERENCE TO RELATED APPLICATION

The present application claims priority to Chinese Patent Application No. 202321536359.1, entitled "Paint Surface Defect Detection System and Paint Surface Defect Detection and Grinding System" and filed on June 15, 2023, and Chinese Patent Application No. 202310713173.7, entitled "Vehicle Paint Surface Defect Detection and Grinding Method and System" and filed on June 15, 2023, the contents of which are expressly incorporated herein by reference in their entirety.

## TECHNICAL FIELD

The present application relates to the field of intelligent technology for vehicle body production and manufacturing, particularly to a paint defect detection and grinding system, method, apparatus, a computer device, a storage medium, and a computer program product.

## BACKGROUND

The coating process is a crucial step in the manufacturing of automotive bodies. It involves spraying paint on the body surface to enhance the body's rust and corrosion resistance, as well as the vehicle's aesthetic appeal. However, automotive body coating is a high-precision and challenging task, where factors such as coatings, coating environment, and the setting of spraying parameters all affect the process quality.

Nevertheless, when the coating process fails to meet production requirements, defects like contamination and damage will occur on the body's paint surface. For instance, there are uneven spots caused by surface impurities during spraying, and scratches resulting from improper handling during transportation. These defects directly impact the vehicle's market sales and the manufacturer's brand image. Therefore, inspecting the automotive body's paint surface for defects before the vehicle leaves the factory is an indispensable process.

Currently, the inspection of automotive body paint surface defects is mainly carried out manually. In specialized lighting workshops, workers detect defects through visual observation and manual touching, and record the defect information. Although the aforementioned manual method can meet production needs, it heavily relies on workers' experience and working conditions, leading to problems such as low work efficiency and unstable quality.

## SUMMARY

According to embodiments of the present application, a paint surface defect detection and grinding system and method are provided.

In the first aspect of the present application, a paint surface defect detection and grinding system is provided, including:

a defect detection device provided at a defect detection station;
a defect grinding device provided at a defect grinding station which is a downstream station of the defect detection station; and
a control device connected to the defect detection device and the defect grinding device.

The control device is configured to control the defect detection device to perform a paint surface defect detection on a target object to obtain a paint surface defect of the target object and a defect position of the paint surface defect, and control the defect grinding device to grind the paint surface defect based on the defect position.

In some embodiments, the defect detection device includes a first robotic arm moving guide rail, a detection robotic arm, and an optical imaging component.

The detection robotic arm is provided on the first robotic arm moving guide rail.

The optical imaging component is provided on the detection robotic arm and is configured to acquire a paint surface image of the target object.

The control device is connected to the detection robotic arm and the optical imaging component respectively, and is configured to control the detection robotic arm to drive the optical imaging component to move to allow the optical imaging component to acquire the paint surface image of the target object, and perform image processing on the paint surface image to determine the paint surface defect of the target object.

In some embodiments, the control device is further connected to the first robotic arm moving guide rail, and is configured to control the first robotic arm moving guide rail to drive the detection robotic arm to move.

In some embodiments, the system further includes an acquisition guidance device provided at an object production station.

The object production station is an upstream station of the defect detection station. The acquisition guidance device is configured to acquire a position and posture of the target object. The control device is configured to control the defect detection device to perform the paint surface defect detection on the target object based on the position and posture.

In some embodiments, the defect grinding device includes a second robotic arm moving guide rail, a grinding robotic arm, and a force-controlled grinding head.

The grinding robotic arm is provided on the second robotic arm moving guide rail.

The force-controlled grinding head is provided on the grinding robotic arm and configured to grind the paint surface defect.

The control device is connected to the grinding robotic arm and the force-controlled grinding head respectively, and is configured to control the grinding robotic arm to drive the force-controlled grinding head to move to allow the force-controlled grinding head to grind the paint surface defect.

In some embodiments, the control device is further connected to the second robotic arm moving guide rail and configured to control the second robotic arm moving guide rail to drive the grinding robotic arm to move.

In some embodiments, the first robotic arm moving guide rail is butted with the second robotic arm moving guide rail.

In some embodiments, the defect detection device further includes a detection station 3D positioning camera configured to perform a local point cloud acquisition on the target object located at the defect detection station to obtain first local point cloud data.

The control device is connected to the detection station 3D positioning camera and configured to determine a defect position of the paint surface defect based on a first object position represented by the first local point cloud data and a detection position and posture of the detection robotic arm.

In some embodiments, the defect grinding device further includes a grinding station 3D positioning camera configured to perform a local point cloud acquisition on the target object located at the defect grinding station to obtain second local point cloud data.

The control device is connected to the grinding station 3D positioning camera and configured to control the grinding robotic arm to drive the force-controlled grinding head to grind the paint surface defect based on a second object position represented by the second local point cloud data and a grinding position and posture of the grinding robotic arm.

In some embodiments, a mounting layout and a workspace of the detection robotic arm correspond one-to-one with those of the grinding robotic arm, and a mounting layout and an acquisition area of the detection station 3D positioning camera correspond one-to-one with those of the grinding station 3D positioning camera.

In some embodiments, when the second object position is the same as the first object position, the control device is configured to determine the grinding position and posture of the grinding robotic arm according to the detection position and posture corresponding to the defect position, and control the grinding robotic arm to drive the force-controlled grinding head to grind the paint surface defect based on the grinding position and posture.

In the second aspect of the present application, a paint surface defect detection and grinding method is provided, including:

controlling a defect detection device to perform a paint surface defect detection on a target object to obtain a paint surface defect of the target object and a defect position of the paint surface defect; and controlling a defect grinding device to grind the paint surface defect based on the defect position.

In some embodiments, controlling the defect detection device to perform the paint surface defect detection on the target object to obtain the paint surface defect of the target object and the defect position of the paint surface defect includes:

controlling a detection robotic arm in the defect detection device to drive an optical component in the defect detection device to move and acquire a paint surface image of the target object, wherein the optical component is provided on the detection robotic arm; and performing image processing on the paint surface image to determine the paint surface defect of the target object.

In some embodiments, the method further includes:

controlling an acquisition guidance device to acquire a position and posture of the target object; and performing the paint surface detection on the target object based on the position and posture of the target object.

In some embodiments, controlling the defect detection device to perform the paint surface defect detection on the target object to obtain the defect position of the paint surface defect includes:

controlling a detection station 3D positioning camera in the defect detection device to perform a local point cloud acquisition on the target object located at the defect detection station to obtain first local point cloud data; and determining the defect position of the paint surface defect based on a first object position represented by the first local point cloud data and a detection position and posture of the detection robotic arm in the defect detection device.

In some embodiments, controlling the defect grinding device to grind the paint surface defect based on the defect position includes:

controlling a grinding station 3D positioning camera in the defect grinding device to perform a local point cloud acquisition on the target object located at the defect grinding station to obtain second local point cloud data; and controlling the grinding robotic arm to drive a force-controlled grinding head to grind the paint surface defect based on a second object position represented by the second local point cloud data and a grinding position and posture of the grinding robotic arm in the defect grinding device, wherein the force-controlled grinding head is provided on the grinding robotic arm.

In some embodiments, controlling the grinding robotic arm to drive the force-controlled grinding head to grind the paint surface defect based on the second object position represented by the second local point cloud data and the grinding position and posture of the grinding robotic arm in the defect grinding device includes:

comparing the second object position represented by the second local point cloud data to the first object position represented by the first local point cloud data;
determining the grinding position and posture of the grinding robotic arm according to the detection position and posture corresponding to the defect position when the second object position is the same as the first object position; and
controlling the grinding robotic arm to drive the force-controlled grinding head to grind the paint surface defect based on the grinding position and posture.

In the third aspect of the present application, a paint surface defect detection and grinding apparatus is provided, including:

a defect detection module, configured to control a defect detection device to perform a paint surface defect detection on a target object to obtain a paint surface defect of the target object and a defect position of the paint surface defect; and
a defect grinding module, configured to control a defect grinding device to grind the paint surface defect based on the defect position.

In some embodiments, the defect detection module is further configured to: control a detection robotic arm in the defect detection device to drive an optical component in the defect detection device to move and acquire a paint surface image of the target object, wherein the optical component is provided on the detection robotic arm; and perform image processing on the paint surface image to determine the paint surface defect of the target object.

In some embodiments, the apparatus further includes a guidance module configured to control an acquisition guidance device to acquire a position and posture of the target object, and control the defect detection device to perform the paint surface detection on the target object based on the position and posture of the target object.

In some embodiments, the defect detection module is further configured to: control a detection station 3D positioning camera in the defect detection device to perform a local point cloud acquisition on the target object located at the defect detection station to obtain first local point cloud data; and determine the defect position of the paint surface defect based on a first object position represented by the first local point cloud data and a detection position and posture of the detection robotic arm in the defect detection device.

In some embodiment, the defect grinding module is further configured to: control a grinding station 3D positioning camera in the defect grinding device to perform the local point cloud acquisition on the target object located at the defect grinding station to obtain second local point cloud data; and control the grinding robotic arm to drive a force-controlled grinding head to grind the paint surface defect based on a second object position represented by the second local point cloud data and a grinding position and posture of the grinding robotic arm in the defect grinding device.

In some embodiment, the defect grinding module is further configured to: compare the second object position represented by the second local point cloud data to the first object position represented by the first local point cloud data; determine the grinding position and posture of the grinding robotic arm according to the detection position and posture corresponding to the defect position when the second object position is the same as the first object position; and control the grinding robotic arm to drive the force-controlled grinding head to grind the paint surface defect based on the grinding position and posture.

In the fourth aspect of the present application, a computer device is provided, including a processor and a memory storing a computer program. The processor, when executing the computer program, implements the above-mentioned paint surface defect detection and grinding method.

In the fifth aspect of the present application, a computer-readable storage medium is provided, on which a computer program is stored. The computer program, when executed by a processor, causes the processor to implement the above-mentioned paint surface defect detection and grinding method.

In the sixth aspect of the present application, a computer program product is provided, including a computer program. The computer program, when executed by a processor, causes the processor to implement the above-mentioned paint surface defect detection and grinding method.

The details of one or more embodiments of the present application are set forth in the accompanying drawings and the description below. Other features, purposes, and advantages of the present application will be obvious from the description, drawings, and the claims.

## BRIEF DESCRIPTION OF THE DRAWINGS

In order to more clearly illustrate the technical solution in the embodiments of the present application or in the conventional technology, accompanying drawings required for descriptions in the embodiments or the conventional technology will be briefly introduced below. Obviously, the drawings described below are merely embodiments of the present application, and those skilled in the art can obtain other drawings according to the disclosed drawings without any creative effort.

FIG. 1 is a structural block diagram illustrating a paint surface defect detection and grinding system according to some embodiments.

FIG. 2 is a schematic structural diagram of a defect detection device according to some embodiments.

FIG. 3 is a schematic structural diagram of a paint surface defect detection and grinding device including a defect grinding device according to some embodiments.

FIG. 4 is a schematic structural diagram of a defect detection device according to some other embodiments.

FIG. 5 is a schematic structural diagram of an offline point extrinsic parameter calibration device for a paint surface image acquisition component according to some embodiments.

FIG. 6 is a schematic structural diagram of an offline extrinsic parameter calibration device for a paint surface image acquisition component and a detection station 3D positioning camera according to some embodiments.

FIG. 7 is a schematic structural diagram of a paint surface defect detection and grinding system according to some embodiments.

FIG. 8 is a flow chart showing a paint surface defect detection and grinding method according to some embodiments.

FIG. 9 is a flow chart showing steps of controlling a grinding robotic arm to drive a force-controlled grinding head to grind a paint surface defect based on a position of a second object represented by second local point cloud data and a grinding position and posture of the grinding robotic arm in a defect grinding device, according to some embodiments.

FIG. 10 is a flow chart showing a paint surface defect detection and grinding method according to other embodiments.

FIG. 11 is a flow chart showing a method for determining extrinsic parameters of a paint surface image acquisition component and a detection station 3D positioning camera at an offline calibration reference point according to some embodiments.

FIG. 12 is a flow chart showing a process of transmitting coordinates of a defect position according to some embodiments.

FIG. 13 is a structural block diagram illustrating a paint surface defect detection and grinding apparatus according to some embodiments.

FIG. 14 is an internal structural diagram of a computer device according to some embodiments.

Reference signs: 101, defect detection device; 102, defect grinding device; 1011, first robotic arm moving guide rail; 1012, detection robotic arm; 1013, paint surface imaging component; 1014, detection station 3D positioning camera; 1021, second robotic arm moving guide rail; 1022, grinding robotic arm; 1023, force-controlled grinding head; 1024, grinding station 3D positioning camera; 103, control device; 1031, defect detection control component; 1032, grinding control component; 104, target object; 105, two-degree-of-freedom base; 106, plane calibration plate; 107, angle-adjustable bracket; 108, double-sided calibration plate.

DETAILED DESCRIPTION

In order to make the purpose, technical solution, and advantages of the present application clearer, the present application is further elaborated below with reference to the accompanying drawings and embodiments. It should be appreciated that the specific embodiments described herein are merely used for explaining the present application and are not intended to limit the present application.

The present application will be further described in detail below with reference to the accompanying drawings and specific embodiments.

In the description of the present application, it should be appreciated that the orientations or position relationships indicated by terms "length", "width", "up", "down", "front", "back", "left", "right", "vertical", "horizontal", "top", "bottom", "inside", "outside", etc., are based on the orientations or position relationships shown in the accompanying drawings, and are merely for the convenience of describing the present application and simplifying the description, which do not indicate or imply that the device or element referred to definitely has a specific orientation, or constructed and operated in a specific orientation, and therefore these terms cannot be understood as a limitation on the present application.

In addition, the terms "first" and "second" are used for descriptive purposes only and should not be understood as indicating or implying relative importance or implicitly indicating the quantity of the indicated technical features. Therefore, features defined with "first" or "second" may explicitly or implicitly include one or more of the features. In the description of the present application, "plurality" means two or more, unless otherwise clearly defined.

In the present application, unless otherwise clearly specified and limited, terms such as "assembling", "coupling", "connecting", and "fixing" should be understood in a broad sense, for example, which may be a fixed connection, a detachable connection, or an integrated connection, or may be a mechanical connection or an electrical connection, or may be a direct connection or indirect connection through an intermediate medium, which may be an internal connection of two elements or an interaction relationship between two elements. For those skilled in the art, the specific meanings of the above terms in the present application can be understood according to specific circumstances.

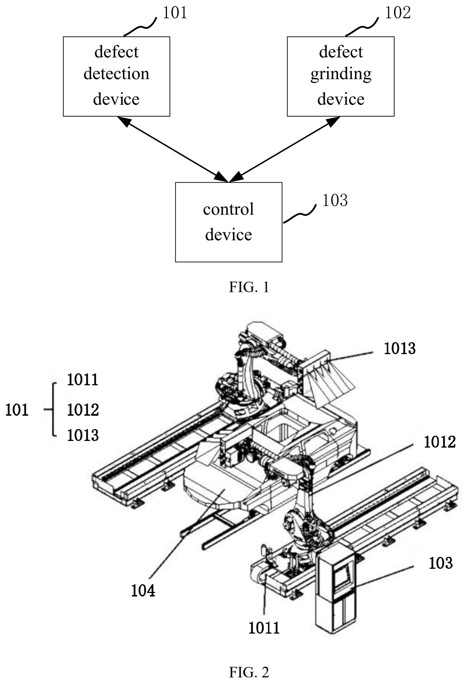

In some embodiments, as shown in FIG. 1, a paint surface defect detection and grinding system is provided, which specifically includes:

a defect detection device 101 provided at a defect detection station;
a defect grinding device 102 provided at a defect grinding station which is a downstream station of the defect detection station; and
a control device 103 connected to the defect detection device 101 and the defect grinding device 102.

Specifically, the control device 103 is configured to control the defect detection device 101 to perform a paint surface defect detection on a target object to obtain a paint surface defect of the target object and a defect position of the paint surface defect, and is further configured to control the defect grinding device 102 to grind the paint surface defect based on the defect position. The target object can be any product with a paint surface, such as a vehicle body. It should be appreciated that the defect grinding device grinding the paint surface defect means grinding and removing the paint surface defect, or performing grinding and repair treatment, such as polishing the paint surface defect.

In the above-mentioned paint surface defect detection and grinding system, the defect detection device is provided at the defect detection station, and the defect grinding device is provided at the downstream station of the defect detection station, i.e., the defect grinding station. Both the defect detection device and the defect grinding device are connected to the control device. The control device can control the defect detection device to perform the paint surface defect detection on the target object, obtain the paint surface defect of the target object and the defect position of the paint surface defect, and then control the defect grinding device to grind the paint surface defect based on the defect position. By coordinated control of the defect detection device and the defect grinding device, a streamlined operation of detecting and grinding the target object can be implemented, which not only improves the efficiency and accuracy of the detection of the paint surface defect of the target object, but also enables the automated grinding of the detected paint surface defect, thereby further improving the production efficiency of the target object.

In some embodiments, as shown in FIG. 2, the defect detection device 101 includes a first robotic arm moving guide rail 1011, a detection robotic arm 1012, and a paint surface imaging component 1013.

The detection robotic arm 1012 is provided on the first robotic arm moving guide rail 1011.

The paint surface imaging component 1013 is provided on the detection robotic arm 1012 and is configured to acquire a paint surface image of the target object 104.

The control device 103 is connected to the detection robotic arm 1012 and the paint surface imaging component 1013 respectively, and is configured to control the detection robotic arm 1012 to drive the paint surface imaging component 1013 to move, allowing the paint surface imaging component 1013 to acquire a paint surface image of the target object 104, and perform image processing on the paint surface image to determine the paint surface defect of the target object 104.

The control device 103 may be integrated with a robotic arm controller connected to the detection robotic arm 1012, an imaging component controller connected to the paint surface imaging component, and an image processor.

Specifically, the robotic arm controller in the control device 103 is connected to the detection robotic arm 1012 and can control the movement of the detection robotic arm 1012. It should be appreciated that the detection robotic arm 1012 may have a plurality of movement dimensions, such as a translational movement or a rotational movement. The imaging component controller in the control device 103 is connected to the paint surface imaging component 1013, and can control the paint surface imaging component 1013 to acquire the paint surface image of the target object 104. The paint surface image acquired by the paint surface imaging component 1013 is processed by the image processor to obtain the paint surface defect of the target object 104.

The detection robotic arm 1012 can move along the first robotic arm moving guide rail 1011, and there can be various ways for the two to move relative to each other.

For example, in some embodiments, a sliding or rolling device may be provided on the detection robotic arm 1012, and the detection robotic arm 1012 can move along the first robotic arm moving guide rail 1011 through the sliding or rolling device to implement the relative movement between the detection robotic arm 1012 and the first robotic arm moving guide rail 1011.

In addition, in some other embodiments, the control device 103 is further connected to the first robotic arm moving guide rail 1011, and is configured to control the first robotic arm moving guide rail 1011 to drive the detection robotic arm 1012 to move.

Specifically, the control device 103 may further include a first guide rail controller. The first guide rail controller may be connected to the first robotic arm moving guide rail 1011 and configured to control the first robotic arm moving guide rail 1011 to drive the detection robotic arm 1012 to move.

In some embodiments, the first robotic arm moving guide rail 1011 may include a fixed portion and a movable portion. The movable portion can move relative to the fixed portion. The detection robotic arm 1012 can be provided on the movable portion, and the robotic arm controller in the control device 103 controls the movable portion to drive the detection robotic arm 1012 to move along the first robotic arm moving guide rail 1011.

In some embodiments, not only can the sliding or rolling device be provided on the detection robotic arm 1012, but also the first robotic arm moving guide rail 1011 can be provided with a fixed portion and a movable portion, which can further expand the movement capability of the detection robotic arm 1012 and improve the flexibility of the system.

The above are merely some exemplary embodiments of the present application, and the present application does not limit the specific connection methods between the detection robotic arm 1012 and the first robotic arm moving guide rail 1011.

In some embodiments, one or more detection robotic arms may be mounted on the first robotic arm moving guide rail, and one or more paint surface imaging components may further be mounted on each detection robotic arm.

Furthermore, the paint surface imaging component may be mounted at the end of the detection robotic arm to improve the movement flexibility of the paint surface imaging component. Naturally, the paint surface imaging component may also be mounted at other positions on the detection robotic arm, such as in the middle section of the detection robotic arm, etc., which is not limited herein.

In some embodiments, the paint surface imaging component may include more than two cameras and more than one diffuse light source system.

In the above embodiment, the defect detection device in the paint surface defect detection and grinding system adopts a guide rail design, which can improve the movement flexibility of the detection robotic arm and enhance the detection convenience of the defect detection device in detecting the target object. Meanwhile, the coordination between the guide rail and the robotic arm is utilized to complete the data acquisition of the vehicle body paint surface, and the detection process does not affect the start and stop of the vehicle body production line, thereby improving the production efficiency.

In order to accurately locate the position of the target object and perform the paint surface defect detection on the target object, in some embodiments, the paint surface defect detection and grinding system further includes an acquisition guidance device provided at an object production station. The object production station is an upstream station of the defect detection station. The acquisition guidance device is configured to guide the defect detection device to acquire the position and posture of the target object. The control device specifically controls the defect detection device to perform the paint surface defect detection on the target object based on the position and posture.

Specifically, when the target object passes through the object production station and is transported to the defect detection station, the acquisition guidance device provided at the object production station generates an arriving signal and transmits the arriving signal to the control device. The control device controls the defect detection device to acquire the position and posture of the target object based on the arriving signal at the defect detection station to obtain the position and posture of the target object, and controls the defect detection device to perform the paint surface defect detection on the target object based on the position and posture. By providing the acquisition guidance device, the system can perform more accurate defect detection on the target object.

In some embodiments, the control device controls the paint surface imaging component in the defect detection device to acquire an object point cloud of the target object based on the arriving signal, calculates the object point cloud acquired by the paint surface imaging component through the image processor, and obtains the position and posture of the target object.

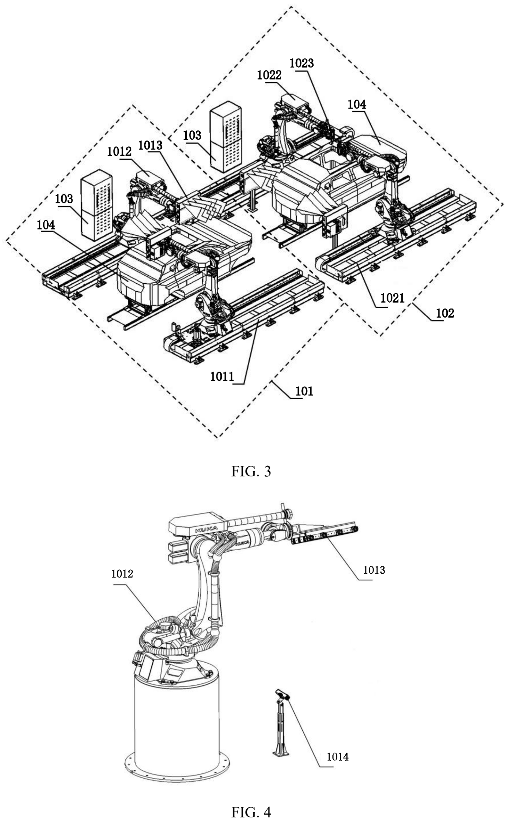

In some embodiments, as shown in FIG. 3, the defect grinding device 102 of the paint surface defect detection and grinding system includes a second robotic arm moving guide rail 1021, a grinding robotic arm 1022, and a force-controlled grinding head 1023.

The grinding robotic arm 1022 is provided on the second robotic arm moving guide rail 1021, and the force-controlled grinding head 1023 is provided on the grinding robotic arm 1022 and configured to grind the paint surface defect. The control device 103 is connected to the grinding robotic arm 1022 and the force-controlled grinding head 1023 respectively, and is configured to control the grinding robotic arm 1022 to drive the force-controlled grinding head 1023 to move, allowing the force-controlled grinding head 1023 to grind the paint surface defect.

The control device 103 may be integrated with a grinding robotic arm controller connected to the grinding robotic arm 1022 and a force-controlled grinding head controller connected to the force-controlled grinding head 1023.

In some embodiments, the force-controlled grinding head 1023 may be mounted at the end of the grinding robotic arm 1022, or in other embodiments, the force-controlled grinding head 1023 may be mounted at other positions on the grinding robotic arm 1022, such as in the middle section of the grinding robotic arm 1022, as long as the grinding operation can be completed.

Specifically, the grinding robotic arm controller in the control device 103 is connected to the grinding robotic arm 1022, and can control the grinding robotic arm 1022 to drive the force-controlled grinding head 1023 to move. Similarly, the grinding robotic arm 1022 may also have a plurality of movement dimensions, such as translational movement or rotational movement. The force-controlled grinding head controller in the control device 103 is connected to the force-controlled grinding head 1023 and can control the force-controlled grinding head 1023 to grind the paint surface defect.

The grinding robotic arm 1022 can move along the second robotic arm moving guide rail 1021, and there can be various ways for the two to move relative to each other.

For example, in some embodiments, the grinding robotic arm 1022 may be provided with a sliding or rolling device, and the grinding robotic arm 1022 may move along the second robotic arm moving guide rail 1021 through the sliding or rolling device to implement the relative movement between the grinding robotic arm 1022 and the second robotic arm moving guide rail 1021.

In addition, in some other embodiments, the control device 103 is further connected to the second robotic arm moving guide rail 1021 and configured to control the second robotic arm moving guide rail 1021 to drive the grinding robotic arm 1022 to move.

Specifically, the control device 103 may further include a second guide rail controller. The second guide rail controller may be connected to the second robotic arm moving guide rail 1021 and configured to control the second robotic arm moving guide rail 1021 to drive the grinding robotic arm 1022 to move. The second guide rail controller and the first guide rail controller may be the same controller or independent controllers.

It should be appreciated that in some examples, the defect detection device includes at least two first robotic arm moving guide rails which are respectively provided on both sides of the detection station. The defect grinding device includes at least two second robotic arm moving guide rails which are respectively provided on both sides of the grinding station.

Furthermore, in some embodiments, the first robotic arm moving guide rail is butted with the second robotic arm moving guide rail. Specifically, when the target object is located at the detection station or the grinding station, the first robotic arm moving guide rail and the second robotic arm moving guide rail located on the same side of the target object can be butted to form a single guide rail. At this moment, the detection robotic arm and the grinding robotic arm located on the same side of the target object can both be provided on this guide rail. It should be appreciated that the number and arrangement of the guide rails are not limited in the present application.

In some embodiments, as shown in FIG. 4, the defect detection device 101 further includes a detection station 3D positioning camera 1014 configured to perform a local point cloud acquisition on the target object 104 located at the defect detection station to obtain first local point cloud data.

The control device 103 (not shown in the figures) is connected to the detection station 3D positioning camera 1014, and is specifically configured to determine a defect position of the paint surface defect based on a first object position represented by the first local point cloud data and a detection position and posture of the detection robotic arm 1012.

Specifically, the control device 103 is connected to the detection station 3D positioning camera 1014. When the target object 104 is transported to the defect detection station, the control device 103 can control the detection station 3D positioning camera 1014 to perform the local point cloud acquisition on the target object 104 at the defect detection station to obtain the first local point cloud data, and process the first local point cloud data using the image processor to obtain the first object position represented by the first local point cloud data. The control device 103 obtains the detection position and posture of the detection robotic arm 1012, and determines the defect position of the paint surface defect based on the first object position represented by the first local point cloud data and the detection position and posture of the detection robotic arm 1012, thereby effectively improving the detection accuracy of the paint surface defect position.

In some embodiments, the defect grinding device further includes a grinding station 3D positioning camera configured to perform a local point cloud acquisition on the target object located at the defect grinding station to obtain second local point cloud data.

The control device is connected to the grinding station 3D positioning camera, and is specifically configured to control the grinding robotic arm to drive the force-controlled grinding head to grind the paint surface defect based on the second object position represented by the second local point cloud data and the grinding position and posture of the grinding robotic arm.

Specifically, the control device is connected to the grinding station 3D positioning camera. When the target object is transported to the defect grinding station, the control device can control the grinding station 3D positioning camera to perform the local point cloud acquisition on the target object at the defect grinding station to obtain the second local point cloud data. The second local point cloud data is then processed by the image processor to obtain the second object position represented by the second local point cloud data. The control device obtains the detection position and posture of the grinding robotic arm, and controls the grinding robotic arm to drive the force-controlled grinding head to grind the paint surface defect based on the second object position represented by the second local point cloud data and the grinding position and posture of the grinding robotic arm, thereby effectively improving the grinding accuracy of the grinding process.

In some embodiments, a mounting layout and a workspace of the detection robotic arm correspond one-to-one with those of the grinding robotic arm, and a mounting layout and a acquisition area of the detection station 3D positioning camera correspond one-to-one with those of the grinding station 3D positioning camera, so that the detection robotic arm and the grinding robotic arm can better coordinate to complete the precise grinding of paint surface defect, achieving the best grinding and repair effect.

In some embodiments, when the second object position is the same as the first object position, the control device determines the grinding position and posture of the grinding robotic arm according to the detection position and posture corresponding to the defect position, and controls the grinding robotic arm to drive the force-controlled grinding head to grind the paint surface defect based on the grinding position and posture.

Specifically, when the second object position is the same as the first object position, the control device may determine that the grinding robotic arm has moved to the paint surface defect, and only the position of the force-controlled grinding head on the grinding robotic arm needs to be adjusted. Accordingly, the control device determines the grinding position and posture of the grinding robotic arm according to the detection position and posture corresponding to the defect position, and controls the grinding robotic arm to drive the force-controlled grinding head to grind the paint surface defect based on the grinding position and posture, so that the paint surface defect can be ground accurately.

In some embodiments, the paint surface defect detection and grinding system further includes an offline point extrinsic parameter calibration device for the paint surface imaging component and an offline extrinsic parameter calibration device for the paint surface imaging component and the detection station 3D positioning camera.

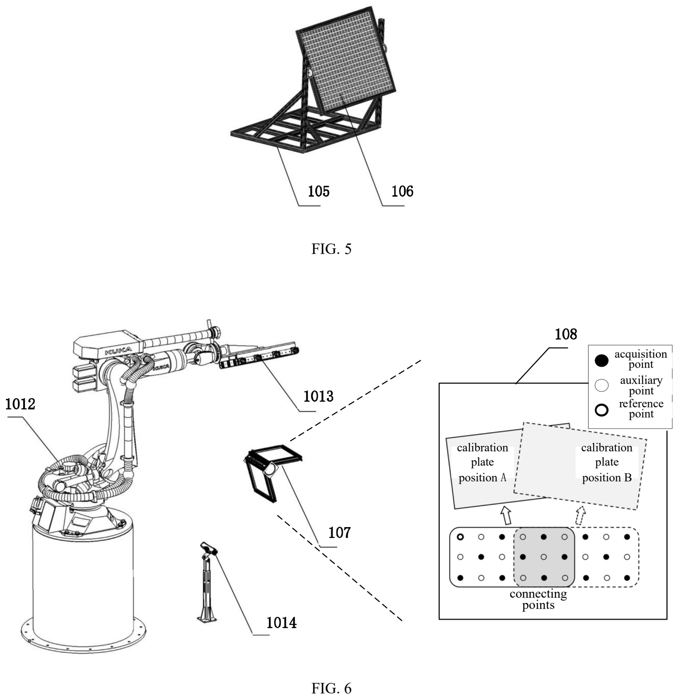

In a specific application example, as shown in FIG. 5, the offline point extrinsic parameter calibration device for the paint surface image acquisition component includes a two-degree-of-freedom base 105 and a large-size plane calibration plate 106. The two-degree-of-freedom base 105 can move up and down and rotate on a single axis. The large-size plane calibration plate 106 includes thousands of calibration blocks with different IDs.

Furthermore, as shown in FIG. 6, in some embodiments, the offline extrinsic parameter calibration device for the paint surface image acquisition component and the detection station 3D positioning camera includes an angle-adjustable bracket 107 and a double-sided calibration plate 108, which can be adapted to different camera field of view layouts.

Furthermore, in a specific application example, the defect detection device performs the paint surface defect detection on the target object, and the obtained paint surface defect of the target object may include a defect size, a defect type, a spatial position of a defect center point, and a defect surface normal vector.

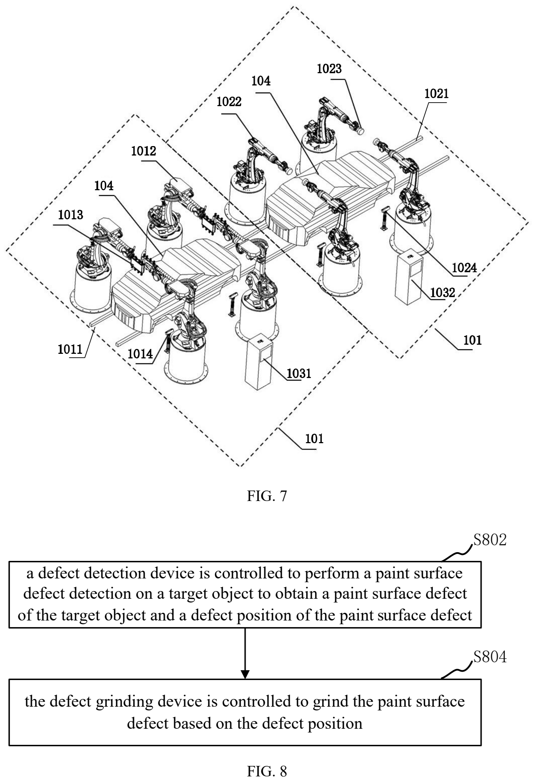

In some embodiments, as shown in FIG. 7, a paint surface defect detection and grinding system is provided. The system is applied to a vehicle body paint surface grinding as an example for illustration. An operation area to which the system is applied is divided into a defect detection station and a defect grinding station. A vehicle body 104 to be detected enters the two stations. The system includes a defect detection device 101 and a defect grinding device 102.

The defect detection device 101 is configured to detect and position a vehicle body paint surface defect. The defect detection device 101 includes more than two detection robotic arms 1012, more than two paint surface imaging components 1013, and a defect detection control component 1031. The defect detection device 101 further includes more than two detection station 3D positioning cameras 1014. The defect detection control component 1031 includes a detection robotic arm controller, an acquisition component controller, and an image processor. The detection robotic arm controller is connected to the detection robotic arm 1012. The acquisition component controller and the image processor are connected to the paint surface image acquisition component 1013.

The defect grinding device 102 is configured to repair the paint surface defect detected at the detection station. The defect grinding device 102 includes more than two grinding robotic arms 1022, more than two force-controlled grinding heads 1023, a grinding control component 1032, and more than two grinding station 3D positioning cameras 1024. The grinding control component 1032 includes a grinding robotic arm controller and a force-controlled grinding head controller. The grinding robotic arm 1022 is connected to the grinding robotic arm controller. The force-controlled grinding head 1023 is mounted at the end of the grinding robotic arm 1022 and is connected to the force-controlled grinding head controller.

The system further includes an offline point extrinsic parameter calibration device for the paint surface image acquisition component (not shown in the figure), and an offline extrinsic parameter calibration device for the paint surface image acquisition components and the detection station 3D positioning camera (not shown in the figure).

In the present application, the mounting layout and workspace of the detection robotic arms 1012 correspond one-to-one with the grinding robotic arms 1022, and the mounting layout and the vehicle body acquisition area of the detection station 3D positioning cameras 1014 correspond one-to-one with the grinding station 3D positioning cameras 1024. The offline point extrinsic parameter calibration device for the paint surface image acquisition component includes a two-degree-of-freedom base and a large-sized plane calibration plate. The two-degree-of-freedom base can move up and down and rotate on a single axis, and the large-sized plane calibration plate includes thousands of calibration blocks with different IDs. The offline extrinsic parameter calibration device for the paint surface image acquisition component and the detection station 3D positioning camera includes an angle-adjustable bracket and a double-sided calibration plate, which can be adapted to different camera field of view layouts.

The paint surface defect detection and grinding system in the embodiment can implement the streamlined operation of the detection and grinding of the vehicle body to be detected, improve the degree of automation and production efficiency of vehicle paint surface defect detection and grinding, and can form a one-to-many or one-to-one layout mode. The guide rail can make the movements of the execution components, such as the detection robotic arm and the grinding robotic arm, etc., more flexible, accurate, and reasonable, which can avoid any situation of interference. Moreover, the guide rail design enables better coordination accuracy between the defect detection operation and the defect grinding operation, both of which can correspond one-to-one to form the best repair effect. Meanwhile, by providing the detection station 3D positioning cameras in one-to-one correspondence with the grinding station 3D positioning cameras, errors in the global calibration of offline acquisition points at the detection station and the global calibration of multiple grinding robotic arms at the grinding station can be avoided.

Based on the same inventive concept, in embodiments of the present application, a paint surface defect detection and grinding method applied to the above-mentioned paint surface defect detection and grinding system is provided.

In some embodiments, as shown in FIG. 8, a paint surface defect detection and grinding method is provided, which includes that:

S802: a defect detection device is controlled to perform a paint surface defect detection on a target object to obtain a paint surface defect of the target object and a defect position of the paint surface defect.

Specifically, when the target object is at the defect detection station, the control device controls the defect detection device to perform the paint surface defect detection on the target object to obtain the paint surface defect of the target object and the defect position of the paint surface defect.

S804: the defect grinding device is controlled to grind the paint surface defect based on the defect position.

Specifically, the control device controls the defect grinding device to grind the paint surface defect based on the detected defect position of the paint surface defect. It can be appreciated that the defect grinding device grinding the paint surface defect means grinding and removing the paint surface defect, or performing grinding and repair treatment, such as polishing the paint surface defect.

In the above-mentioned paint surface defect detection and grinding method, the defect detection device is provided at the defect detection station, and the defect grinding device is provided at the downstream station of the defect detection station, i.e., the defect grinding station. Both the defect detection device and the defect grinding device are connected to the control device. The control device can control the defect detection device to perform the paint surface defect detection on the target object to obtain the paint surface defect of the target object and the defect position of the paint surface defect, and then control the defect grinding device to grind the paint surface defect based on the defect position. By coordinated control of the defect detection device and the defect grinding device, a streamlined operation of detecting and grinding the target object can be implemented, which not only improves the efficiency and accuracy of the detection of the paint surface defect of the target object, but also enables the automated grinding of the detected paint surface defect, thereby further improving the production efficiency of the target object.

In some embodiments, the step that the defect detection device is controlled to perform the paint surface defect detection on the target object to obtain the paint surface defect of the target object includes controlling the detection robotic arm in the defect detection device to drive an optical component in the defect detection device to move and acquire a paint surface image of the target object. The optical component is provided on the detection robotic arm. Image processing is performed on the paint surface image to determine the paint surface defect of the target object and the defect position of the paint surface defect.

Specifically, when the target object is located at the defect detection station, the control device controls the detection robotic arm in the defect detection device to drive the optical component in the defect detection device to move and acquire the paint surface image of the target object, and processes the paint surface image of the target object to obtain the paint surface defect of the target object and the defect position of the paint surface defect. It should be appreciated that the control device may include an image processor. After obtaining the paint surface image of the target object, the image processor processes the paint surface image of the target object to obtain the paint surface defect of the target object and the defect position of the paint surface defect.

In some embodiments, the paint surface defect detection and grinding method further includes that:

The defect detection device is controlled based on an acquisition guidance device to acquire a position and posture of the target object, and the defect detection device is controlled to perform the paint surface detection on the target object based on the position and posture of the target object.

The acquisition guidance device is provided at an object production station which is a downstream station of the defect detection station.

Specifically, when the target object passes through the object production station and is transported to the defect detection station, the acquisition guidance device provided at the object production station generates an arriving signal and transmits the arriving signal to the control device. The control device controls the defect detection device based on the arriving signal to acquire the position and posture of the target object at the defect detection station, obtains the position and posture of the target object, and controls the defect detection device to perform the paint surface defect detection on the target object based on the position and posture. Through the guidance of the acquisition guidance device, the system can perform more accurate defect detection on the target object.

In some embodiments, the defect detection device being controlled to perform the paint surface defect on the target object to obtain the defect position of the paint defect includes that:

The detection station 3D positioning camera in the defect detection device is controlled to perform a local point cloud acquisition on the target object located at the defect detection station to obtain first local point cloud data, the defect position of the paint surface defect is determined based on a first object position represented by the first local point cloud data and a detection position and posture of the detection robotic arm in the defect detection device.

Specifically, when the target object is transported to the defect detection station, the control device can control the detection station 3D positioning camera to perform the local point cloud acquisition on the target object at the defect detection station to obtain the first local point cloud data, and process the first local point cloud data using an image processor to obtain the first object position represented by the first local point cloud data. The control device obtains the detection position and posture of the detection robotic arm, and determines the defect position of the paint surface defect based on the first object position represented by the first local point cloud data and the detection position and posture of the detection robotic arm, thereby effectively improving the detection accuracy at the paint surface defect position.

In some embodiments, the defect grinding device being controlled to grind the paint surface defect based on the defect position includes that:

The grinding station 3D positioning camera in the defect grinding device is controlled to perform the local point cloud acquisition on the target object located at the defect grinding station to obtain second local point cloud data, and the grinding robotic arm is controlled to drive a force-controlled grinding head to grind the paint surface defect based on a second object position represented by the second local point cloud data and a grinding position and posture of the grinding robotic arm in the defect grinding device. The force-controlled grinding head is provided on the grinding robotic arm.

Specifically, when the target object is transported to the defect grinding station, the control device can control the grinding station 3D positioning camera to perform the local point cloud acquisition on the target object at the defect grinding station to obtain the second local point cloud data, and process the second local point cloud data using the image processor to obtain the second object position represented by the second local point cloud data. The control device obtains the detection position and posture of the grinding robotic arm, and controls the grinding robotic arm to drive the force-controlled grinding head to grind the paint surface defect based on the second object position represented by the second local point cloud data and the grinding position and posture of the grinding robotic arm, thereby effectively improving the grinding accuracy of the grinding process.

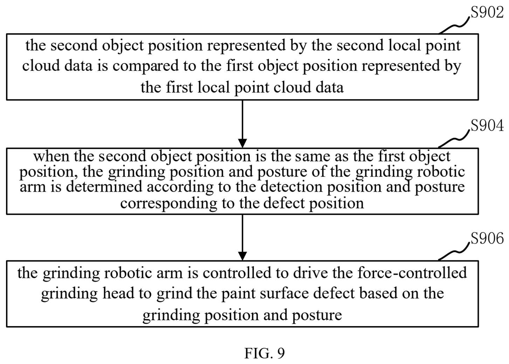

In some embodiments, as shown in FIG. 9, the grinding robotic arm being controlled to drive the force-controlled grinding head to grind the paint surface defect based on the second object position represented by the second local point cloud data and the grinding position and posture of the grinding robotic arm in the defect grinding device includes that:

S902: the second object position represented by the second local point cloud data is compared to the first object position represented by the first local point cloud data.

Specifically, the control device compares the second object position represented by the second local point cloud data to the first object position represented by the first local point cloud data.

S904: when the second object position is the same as the first object position, the grinding position and posture of the grinding robotic arm are determined according to the detection position and posture corresponding to the defect position.

Specifically, when the second object position is the same as the first object position, it can be determined that the grinding robotic arm has moved to the paint surface defect at the moment, and only the position of the force-controlled grinding head on the grinding robotic arm needs to be adjusted. Accordingly, the control device determines the grinding position and posture of the grinding robotic arm according to the detection position and posture corresponding to the defect position.

S906: the grinding robotic arm is controlled to drive the force-controlled grinding head to grind the paint surface defect based on the grinding position and posture.

Specifically, the control device controls the grinding robotic arm based on the grinding position and posture to drive the force-controlled grinding head to grind the paint surface defect, which can accurately grind the paint surface defect.

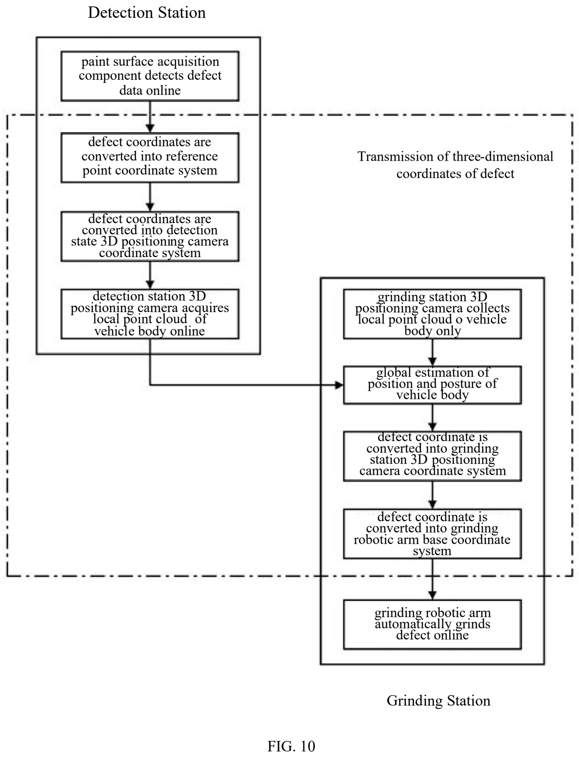

In some embodiments, as shown in FIG. 10, a paint surface defect detection and grinding method is provided, including:

an offline processing operation, which specifically includes three processing steps. First, offline acquisition point planning for the detection station is performed, and trajectories of multiple detection robotic arms are planned. Second, offline acquisition point calibration at the detection station is performed, and an offline calibration is performed on extrinsic parameters of the paint surface image acquisition component and the detection station 3D positioning camera. Third, a hand-eye calibration is performed on the grinding robotic arm and the grinding station 3D positioning camera at the grinding station.

an online processing operation, in which, specifically, the paint surface defect is performed first to obtain a defect attribute and a defect position, and coordinates of the defect position are delivered to an automatic grinding component which in turn grinds the paint surface defect.

In specific application examples, the offline acquisition point planning for the detection station includes a coarse planning for a simulation scene, in which an actual vehicle body CAD model is imported into a digital twin simulation system, a to-be-detected area on the vehicle body is specified, and the simulation system automatically plans a plurality of acquisition points based on the vehicle body surface shape and a specular reflection field of view of an imaging component. Since there is a certain error between the simulation and reality, fine planning is required for the real scene.

In some embodiments, the fine planning process for the actual scene may include the following steps.

First, coarse-planning points of the simulation scene are imported into the real scene, and the detection robotic arm equipped with the image acquisition component acquires point cloud data of the vehicle body paint surface at each coarse-planning point.

Second, all acquired point cloud data are spliced based on extrinsic parameters of the coarse-planning points. The extrinsic parameters of fine-planning points in the real scene are obtained through the position and posture of the end of the detection robotic arm and the hand-eye calibration result.

Third, a point assessment is performed based on a coverage condition of the vehicle body surface and an imaging quality.

Fourth, fine adjustment is performed on the points, that is, a point assessment is performed according to the above steps. The fine adjustment on the points and the assessment process are repeated until the actual detection requirements are satisfied.

After offline acquisition point planning is completed, the trajectories of multiple detection robotic arms need to be planned to satisfy two requirements. First, there is no interference between the robotic arms and between the robotic arms and the vehicle body, that is, no collision. Second, the trajectories are optimal (with the shortest duration) to satisfy the beat requirements. In a specific application example, the trajectory planning process for multiple detection robotic arms may include:

a coarse planning for a simulation scene, in which, offline planning points are loaded into the digital twin simulation system, and the system automatically plans an interference area based on the offline points, and sets path points between safety points and interpolation points, and completes the trajectory planning of multiple detection robotic arms.

Since there is a certain gap between the simulation scene and the real scene, fine planning for the real scene is required.

a fine planning for the real scene, in which, the coarse-planning trajectories are imported to the simulation scene, and the fine adjustment is performed on the trajectories according to the actual interference and operation conditions.

After the offline acquisition point planning is completed, in order to ensure the accuracy of the point extrinsic parameters, a visual calibration method is further adopted to perform the calibration in the present application. In a specific application example, the process of offline acquisition point calibration at the detection station may include the following steps.

Step 1: planned points in an area under the jurisdiction of each detection robotic arm are divided into regions, and then a position of the base, and a height and an angle of the calibration plate are adjusted according to the distribution of the points so that as many points as possible can cover the calibration plate.

Step 2: a plurality of auxiliary points are added between the acquisition points to increase a common viewing area of adjacent points and ensure the accuracy of calibration.

Step 3: the camera intrinsic parameters of the paint surface image acquisition component are calibrated based on a checkerboard calibration plate.

Step 4: the robotic arm carries the paint surface image acquisition component to acquire a two-dimensional image of the calibration plate 13 at the acquisition points and the auxiliary points.

Step 5: features are extracted from the acquired calibration plate image, and the ID and center point information of each calibration block are detected.

Step 6: feature matching is performed on the calibration image of each point with the calibration images of other points based on the detected calibration block ID information, that is, calibration blocks with the same ID are determined as a set of matching features.

Step 7: based on the camera intrinsic parameters and feature matching information, a motion recovery structure algorithm is adopted to simultaneously estimate three-dimensional coordinates of the feature points of the calibration plate and position and posture information of each point.

Step 8: global scale information of the scene is estimated based on the estimated three-dimensional coordinates of the feature points and prior size information of the calibration plate.

Step 9: relative position and posture of each acquisition point relative to the reference point are calculated based on the estimated phase position and posture of each point and the estimated global scale information.

Step 10, as shown in the calibration plate 108 in FIG. 6, if the current position A of the calibration plate cannot be covered by all points, it is necessary to move the calibration plate to the position B and ensure that connecting points can simultaneously cover both positions A and B of the calibration plate. Steps 4 to 9 are then repeated to calculate the extrinsic parameters of the remaining points, and the extrinsic parameters of the remaining points are converted to the reference point based on the weighted average of multiple connecting points.

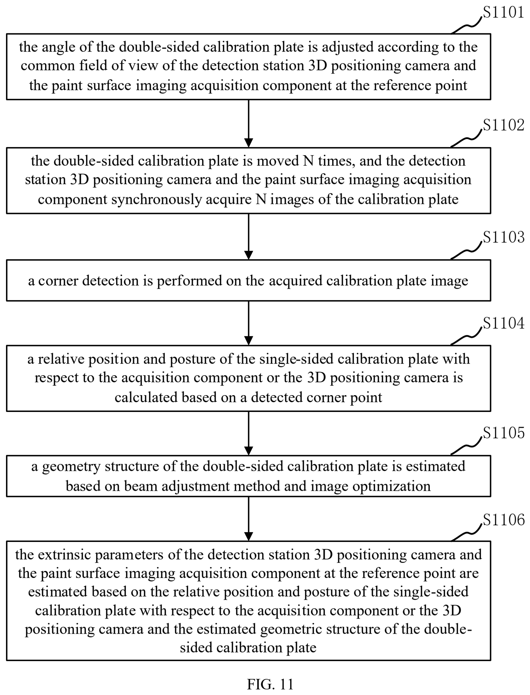

After the calibration of the extrinsic parameters of the offline acquisition points is completed, the coordinates of the defect detected at each point can be converted to the reference point. In order to convert the coordinates of the defect to the detection state 3D positioning camera coordinate system, it is required to perform the offline calibration on the extrinsic parameters of the paint surface image acquisition component at the reference point and the detection station 3D positioning camera. In a specific application example, as shown in FIG. 11, the process may include the following steps.

S1101: as shown in FIG. 7, the angle of the double-sided calibration plate is adjusted according to the common field of view of the detection station 3D positioning camera and the paint surface image acquisition component at the reference point.

S1102: the double-sided calibration plate is moved N times, and the detection station 3D positioning camera and the paint surface image acquisition component synchronously acquire N images of the calibration plate.

S1103: a corner detection is performed on the acquired calibration plate image.

S1104: a relative position and posture of a single-sided calibration plate with respect to the acquisition component or the 3D positioning camera is calculated based on the detected corner point.

S1105: a geometry structure of the double-sided calibration plate is estimated based on a beam adjustment method and image optimization.

S1106: the extrinsic parameters of the detection station 3D positioning camera and the paint surface image acquisition component at the reference point are estimated based on the relative position and posture of the single-sided calibration plate with respect to the acquisition component or the 3D positioning camera and the estimated geometric structure of the double-sided calibration plate.

In a specific application example, the process that the hand-eye calibration is performed on the grinding statin 3D positioning camera and the grinding robotic arm may include that: the calibration plate is fixed to the end of the grinding robotic arm, the grinding robotic arm is moved multiple times to enable the grinding station 3D positioning camera to observe the calibration plate, rectangular coordinates of the grinding robotic arm and a image of the corresponding calibration plate are recorded, and extrinsic parameters of the grinding station 3D positioning camera with respect to a grinding robotic arm base coordinate system is calibrated based on an hand-eye calibration algorithm.

In a specific application example, when the paint surface defect detection is performed, after the vehicle body arrives at the detection station, a number of (such as four) detection robotic arms take photos and acquire images according to the offline-planned acquisition points, and simultaneously perform the defect detection and positioning using a paint surface detection method. Defect attributes, including a defect type, a defect size, three-dimensional coordinates of a center point of the defect, and a normal direction of a neighboring surface of the defect, are output.

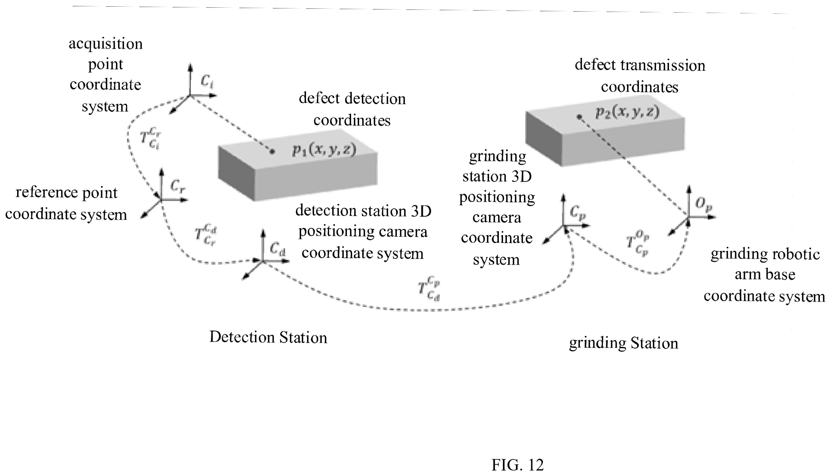

In a specific application example, as shown in FIG. 12, when the coordinates of the defect position are transmitted, the specific process may include that:

when the vehicle body arrives at the detection station, the detection station 3D positioning camera synchronously acquires a local point cloud of the vehicle body for a subsequent position and posture correction of the vehicle body;

after the vehicle body is detected completely, defect coordinates detected in each acquisition point coordinate system $C_i$ is converted into the reference point coordinate system $C_r$ through offline calibrated point extrinsic parameter $T_{C_i}^{C_r}$;

the coordinates of the defect in the reference point coordinate system is converted into coordinates in a detection station 3D positioning camera coordinate system $C_d$ through the offline calibrated extrinsic parameter $T_{C_i}^{C_d}$;

when the vehicle body arrives at the grinding station, the grinding station 3D positioning camera acquires the local point cloud of the vehicle body, the correction position and posture of the vehicle body $T_{C_d}^{C_p}$ is obtained through an online registration of the point cloud acquired at the detection station, the defect coordinates in the detection station 3D positioning camera coordinate system are then converted into coordinates in the grinding station 3D positioning camera coordinate system $C_p$ through the correction position and posture of the vehicle body $T_{C_d}^{C_p}$; and

the defect coordinates in the grinding station 3D positioning camera coordinate system are converted into coordinates in the grinding robotic arm base coordinate system $O_p$ through the offline hand-eye calibration extrinsic parameter $T_{C_p}^{O_p}$.

In a specific application example, when the vehicle body arrives at the grinding station and the defect coordinate is transmitted completely, a plurality of grinding robotic arms start to perform the online task planning, path planning, and trajectory planning, and then coordinate to grind the defect.

The paint surface defect detection and grinding method in the embodiment has a wide range of applications, a high degree of intelligence, and a high detection and grinding efficiency. By using the visual positioning solution, the transmission accuracy of the defect coordinate can be greatly improved, and the visual calibration accuracy is much higher than the physical positioning accuracy.

It should be appreciated that, although the steps in the flow charts involved in the embodiments described above are displayed in sequence as indicated by the arrows, these steps are not definitely executed in the order indicated by the arrows. Unless otherwise specified herein, there is no strict order restriction on the execution of these steps, and these steps may be executed in other orders. Moreover, at least part of the steps in the flow charts involved in the embodiments described above may include multiple steps or multiple stages. These steps or stages are not definitely executed at the same time, but may be executed at different moments. These steps or stages are not definitely executed sequentially, but may be executed in turn or alternately with other steps or at least part of the steps or stages in other steps.

Based on the same inventive concept, in an embodiment of the present application, a paint surface defect detection and grinding apparatus for implementing the above-mentioned paint surface defect detection and grinding method is provided. The solution to the problem provided by the apparatus is similar to the solution described in the above method. Therefore, as for the specific limitations in one or more embodiments of the paint surface defect detection and grinding apparatus provided below, reference can be made to the above limitations on the paint surface defect detection and grinding method, which will not be repeated here.

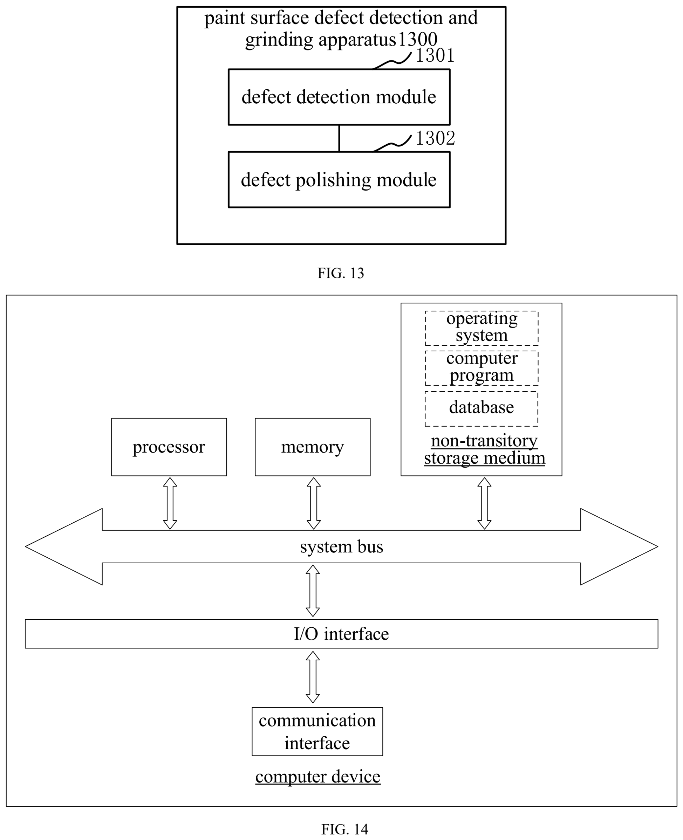

In some embodiments, as shown in FIG. 13, a paint surface defect detection and grinding apparatus 1300 is provided, including a defect detection module 1301 and a defect grinding module 1302.

The defect detection module 1301 is configured to control a defect detection device to perform a paint surface defect detection on a target object to obtain a paint surface defect of the target object and a defect position of the paint surface defect.

The defect grinding module 1302 is configured to control a defect grinding device to grind the paint surface defect based on the defect position.

In the above-mentioned paint surface defect detection and grinding apparatus, the defect detection device is provided at the defect detection station, and the defect grinding device is provided at the downstream station of the defect detection station, i.e., the defect grinding station. Both the defect detection device and the defect grinding device are connected to the control device. The control device can control the defect detection device to perform the paint surface defect detection on the target object to obtain the paint surface defect of the target object and the defect position of the paint surface defect, and then control the defect grinding device to grind the paint surface defect based on the defect position. By coordinated control of the defect detection device and the defect grinding device, a streamlined operation of detecting and grinding the target object can be implemented, which not only improves the efficiency and accuracy of the detection of the paint surface defect of the target object, but also enables the automated grinding of the detected paint surface defect, thereby further improving the production efficiency of the target object.

In some embodiments, the defect detection module is further configured to control a detection robotic arm in the defect detection device to drive an optical component in the defect detection device to move and acquire a paint surface image of the target object, the optical component being provided on the detection robotic arm, and perform image processing on the paint surface image to determine the paint surface defect of the target object.

In some embodiments, the paint surface defect detection and grinding apparatus further includes a guidance module configured to control an acquisition guidance device to acquire a position and posture of the target object, and control the defect detection device to perform the paint surface detection on the target object based on the position and posture of the target object.

In some embodiments, the defect detection module is further configured to control the detection station 3D positioning camera in the defect detection device to perform a local point cloud acquisition on the target object located at the defect detection station to obtain first local point cloud data, and determine the defect position of the paint surface defect based on a first object position represented by the first local point cloud data and a detection position and posture of the detection robotic arm in the defect detection device.

In some embodiments, the defect grinding module is further configured to control the grinding station 3D positioning camera in the defect grinding device to perform the local point cloud acquisition on the target object located at the defect grinding station to obtain second local point cloud data, and control the grinding robotic arm to drive a force-controlled grinding head to grind the paint surface defect based on a second object position represented by the second local point cloud data and a grinding position and posture of the grinding robotic arm in the defect grinding device. The force-controlled grinding head is provided on the grinding robotic arm.

In some embodiments, the defect grinding module is further configured to compare the second object position represented by the second local point cloud data to the first object position represented by the first local point cloud data, determine the grinding position and posture of the grinding robotic arm according to the detection position and posture corresponding to the defect position when the second object position is the same as the first object position, and control the grinding robotic arm to drive the force-controlled grinding head to grind the paint surface defect based on the grinding position and posture.

The modules in the above-mentioned paint surface defect detection and grinding apparatus can be fully or partially implemented by software, hardware, or a combination thereof. The above modules may be embedded in or independent of a processor in the computer device in the form of hardware, or may be stored in a memory of the computer device in the form of software, so that the processor can invoke and execute the operations corresponding to the above modules.

In some embodiments, a computer device is provided. The computer device may be a control device, and its internal structural diagram may be as shown in FIG. 14. The computer device includes a processor, a memory, and a network interface connected via a system bus. The processor of the computer device is configured to provide computing and control capabilities. The memory of the computer device includes a non-transitory storage medium and an internal storage. The non-transitory storage medium stores an operating system, a computer program, and a database. The internal storage provides an environment for the operations of the operating system and computer program in the non-transitory storage medium. The database of the computer device is configured to store a paint surface defect of a target object and defect position data of the paint surface defect. The network interface of the computer device is configured to communicate with an external terminal via a network connection. When the computer program is executed by the processor, a paint surface defect detection and grinding method is implemented.

Those skilled in the art may understand that the structure shown in FIG. 14 is merely a block diagram of a portion of the structure related to the solution of the present application, and does not constitute a limitation on the computer device to which the solution of the present application is applied. The specific computer device may include more or fewer components than shown in the figure, or combine certain components, or have a different arrangement of components.

In some embodiments, a computer device is provided, including a processor and a memory storing a computer program. The processor, when executing the computer program, may implement the specific steps of the above-mentioned paint surface defect detection and grinding method.

In some embodiments, a computer-readable storage medium is provided, on which a computer program is stored. The computer program, when executed by a processor, may cause the processor to implement the specific steps of the above-mentioned paint surface defect detection and grinding method.

In some embodiments, a computer program product is provided, comprising a computer program. The computer program, when executed by a processor, may cause the processor to implement the specific steps of the above-mentioned paint surface defect detection and grinding method.

It should be noted that the user information (including but not limited to user device information, user personal information, etc.) and data (including but not limited to data used for analysis, stored data, displayed data, etc.) involved in the present application are all information and data authorized by the user or fully authorized by all parties.

Those skilled in the art may understand that all or part of the processes in the above-mentioned method embodiments can be implemented by instructing related hardware through a computer program. The computer program can be stored in a non-transitory computer-readable storage medium. When the computer program is executed, the process may include the procedures in the above-mentioned method embodiments. Any reference to memory, database, or other media used in the embodiments provided in the present application may include at least one of non-transitory memory and transitory memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory. By way of illustration and not limitation, the RAM may be in various forms, such as a static random access memory (SRAM) or a dynamic random access memory (DRAM). The database involved in each embodiment provided in the present application may include at least one of a relational database and a non-relational database. The non-relational database may include, but is not limited to, a distributed database based on blockchain. The processor involved in the various embodiments provided in the present application may be a general-purpose processor, a central processing unit, a graphics processor, a digital signal processor, a programmable logic device, a data processing logic device based on quantum computing, etc., but is not limited thereto.

The technical features of the above embodiments can be combined arbitrarily. To make the description concise, not all possible combinations of the technical features in the above embodiments are described. However, as long as there is no contradiction in the combinations of these technical features, these combinations should be considered to be within the scope of the present application.

The above-mentioned embodiments only express several implementation modes of the present application. The description thereof is relatively specific and detailed, but it should not be understood as limiting the scope of the patent of the present application. It should be pointed out that those skilled in the art can make several transformations and improvements without departing from the concept of the present application, and these all fall within the scope of protection of the present application. Therefore, the protection scope of the present application shall be subject to the appended claims.

## Claims

1. A paint surface defect detection and grinding system, **characterized by** comprising:

   a defect detection device provided at a defect detection station;
   a defect grinding device provided at a defect grinding station which is a downstream station of the defect detection station; and
   a control device connected to the defect detection device and the defect grinding device;
   wherein the control device is configured to control the defect detection device to perform a paint surface defect detection on a target object to obtain a paint surface defect of the target object and a defect position of the paint surface defect, and control the defect grinding device to grind the paint surface defect based on the defect position.

2. The system according to claim 1, wherein the defect detection device comprises a first robotic arm moving guide rail, a detection robotic arm, and a paint surface imaging component,

   the detection robotic arm is provided on the first robotic arm moving guide rail,
   the paint surface imaging component is provided on the detection robotic arm and is configured to acquire a paint surface image of the target object, and
   the control device is connected to the detection robotic arm and the paint surface imaging component respectively, and is configured to control the detection robotic arm to drive the paint surface imaging component to move to allow the paint surface imaging component to acquire the paint surface image of the target object, and perform image processing on the paint surface image to determine the paint surface defect of the target object.

3. The system according to claim 2, wherein the control device is further connected to the first robotic arm moving guide rail, and is configured to control the first robotic arm moving guide rail to drive the detection robotic arm to move.

4. The system according to any one of claims 1 to 3, wherein the system further comprises:

   an acquisition guidance device provided at an object production station,
   wherein the object production station is an upstream station of the defect detection station,
   the acquisition guidance device is configured to guide the defect detection device to acquire a position and posture of the target object, and the control device is configured to control the defect detection device to perform the paint surface defect detection on the target object based on the position and posture.

5. The system according to any one of claims 1 to 4, wherein the defect grinding device comprises a second robotic arm moving guide rail, a grinding robotic arm, and a force-controlled grinding head,

   the grinding robotic arm is provided on the second robotic arm moving guide rail,
   the force-controlled grinding head is provided on the grinding robotic arm and configured to grind the paint surface defect, and
   the control device is connected to the grinding robotic arm and the force-controlled grinding head respectively, and is configured to control the grinding robotic arm to drive the force-controlled grinding head to move to allow the force-controlled grinding head to grind the paint surface defect.

6. The system according to claim 5, wherein the control device is further connected to the second robotic arm moving guide rail and configured to control the second robotic arm moving guide rail to drive the grinding robotic arm to move.

7. The system according to claim 5 or 6, wherein the first robotic arm moving guide rail is butted with the second robotic arm moving guide rail.

8. The system according to any one of claims 2 to 7, wherein the defect detection device further comprises:

   a detection station 3D positioning camera, configured to perform a local point cloud acquisition on the target object located at the defect detection station to obtain first local point cloud data,
   wherein the control device is connected to the detection station 3D positioning camera and configured to determine a defect position of the paint surface defect based on a first object position represented by the first local point cloud data and a detection position and posture of the detection robotic arm.

9. The system according to any one of claims 5 to 8, wherein the defect grinding device further comprises:

a grinding station 3D positioning camera, configured to perform a local point cloud acquisition on the target object located at the defect grinding station to obtain second local point cloud data, wherein the control device is connected to the grinding station 3D positioning camera, and configured to control the grinding robotic arm to drive the force-controlled grinding head to grind the paint surface defect based on a second object position represented by the second local point cloud data and a grinding position and posture of the grinding robotic arm.

10. The system according to claim 9, wherein a mounting layout and a workspace of the detection robotic arm correspond one-to-one with those of the grinding robotic arm, and a mounting layout and an acquisition area of the detection station 3D positioning camera correspond one-to-one with those of the grinding station 3D positioning camera.

11. The system according to claim 9 or 10, wherein when the second object position is the same as the first object position, the control device is configured to determine the grinding position and posture of the grinding robotic arm according to the detection position and posture corresponding to the defect position, and control the grinding robotic arm to drive the force-controlled grinding head to grind the paint surface defect based on the grinding position and posture.

12. A paint surface defect detection and grinding method, **characterized by** comprising:

controlling a defect detection device to perform a paint surface defect detection on a target object to obtain a paint surface defect of the target object and a defect position of the paint surface defect; and controlling a defect grinding device to grind the paint surface defect based on the defect position.

13. The method according to claim 12, wherein controlling the defect detection device to perform the paint surface defect detection on the target object to obtain the paint surface defect of the target object and the defect position of the paint surface defect comprises:

controlling a detection robotic arm in the defect detection device to drive an optical component in the defect detection device to move and acquire a paint surface image of the target object, wherein the optical component is provided on the detection robotic arm; and performing image processing on the paint surface image to determine the paint surface defect of the target object and the defect position of the paint surface defect.

14. The method according to claim 12 or 13, wherein the method further comprises:

controlling the defect detection device to acquire a position and posture of the target object based on an acquisition guidance device; and controlling the defect detection device to perform the paint surface detection on the target object based on the position and posture of the target object.

15. The method according to claim 13 or 14, wherein controlling the defect detection device to perform the paint surface defect detection on the target object to obtain the defect position of the paint surface defect comprises:

controlling a detection station 3D positioning camera in the defect detection device to perform a local point cloud acquisition on the target object located at the defect detection station to obtain first local point cloud data; and determining the defect position of the paint surface defect based on a first object position represented by the first local point cloud data and a detection position and posture of the detection robotic arm in the defect detection device.

16. The method according to any one of claims 12 to 15, wherein controlling the defect grinding device to grind the paint surface defect based on the defect position comprises:

controlling a grinding station 3D positioning camera in the defect grinding device to perform a local point cloud acquisition on the target object located at the defect grinding station to obtain second local point cloud data; and controlling the grinding robotic arm to drive a force-controlled grinding head to grind the paint surface defect based on a second object position represented by the second local point cloud data and a grinding position and posture of the grinding robotic arm in the defect grinding device, wherein the force-controlled grinding head is provided on the grinding robotic arm.

**17.** The method according to claim 16, wherein controlling the grinding robotic arm to drive the force-controlled grinding head to grind the paint surface defect based on the second object position represented by the second local point cloud data and the grinding position and posture of the grinding robotic arm in the defect grinding device comprises:

comparing the second object position represented by the second local point cloud data to the first object position represented by the first local point cloud data;

determining the grinding position and posture of the grinding robotic arm according to the detection position and posture corresponding to the defect position when the second object position is the same as the first object position; and controlling the grinding robotic arm to drive the force-controlled grinding head to grind the paint surface defect based on the grinding position and posture.

**18.** A paint surface defect detection and grinding apparatus, comprising:

a defect detection module, configured to control a defect detection device to perform a paint surface defect detection on a target object to obtain a paint surface defect of the target object and a defect position of the paint surface defect; and

a defect grinding module, configured to control a defect grinding device to grind the paint surface defect based on the defect position.

**19.** A computer device, comprising a processor and a memory storing a computer program, wherein the processor, when executing the computer program, implements the method of any one of claims 12 to 17.

**20.** A computer-readable storage medium, on which a computer program is stored, wherein the computer program, when executed by a processor, causes the processor to implement the method of any one of claims 12 to 17.

101

defect
detection
device

102

defect
grinding
device

103

control
device

FIG. 1

1013

1011

101

1012

1013

1012

103

104

1011

FIG. 2

FIG. 3

FIG. 4

FIG. 5

FIG. 6

FIG. 7

a defect detection device is controlled to perform a paint surface defect detection on a target object to obtain a paint surface defect of the target object and a defect position of the paint surface defect

the defect grinding device is controlled to grind the paint surface defect based on the defect position

FIG. 8

S902

the second object position represented by the second local point cloud data is compared to the first object position represented by the first local point cloud data

S904

when the second object position is the same as the first object position, the grinding position and posture of the grinding robotic arm is determined according to the detection position and posture corresponding to the defect position

S906

the grinding robotic arm is controlled to drive the force-controlled grinding head to grind the paint surface defect based on the grinding position and posture

FIG. 9

Detection Station

paint surface acquisition
component detects defect
data online

defect coordinates are
converted into reference
point coordinate system

Transmission of three-dimensional
coordinates of defect

defect coordinates are
converted into detection
state 3D positioning camera
coordinate system

detection station 3D
positioning camera acquires
local point cloud of
vehicle body online

grinding station 3D
positioning camera collects
local point cloud o vehicle
body only

global estimation of
position and posture of
vehicle body

defect coordinate is
converted into grinding
station 3D positioning
camera coordinate system

defect coordinate is
converted into grinding
robotic arm base coordinate
system

grinding robotic arm
automatically grinds
defect online

Grinding Station

FIG. 10

S1101

the angle of the double-sided calibration plate is adjusted according to the common field of view of the detection station 3D positioning camera and the paint surface imaging acquisition component at the reference point

S1102

the double-sided calibration plate is moved N times, and the detection station 3D positioning camera and the paint surface imaging acquisition component synchronously acquire N images of the calibration plate

S1103

a corner detection is performed on the acquired calibration plate image

S1104

a relative position and posture of the single-sided calibration plate with respect to the acquisition component or the 3D positioning camera is calculated based on a detected corner point

S1105

a geometry structure of the double-sided calibration plate is estimated based on beam adjustment method and image optimization

S1106

the extrinsic parameters of the detection station 3D positioning camera and the paint surface imaging acquisition component at the reference point are estimated based on the relative position and posture of the single-sided calibration plate with respect to the acquisition component or the 3D positioning camera and the estimated geometric structure of the double-sided calibration plate

FIG. 11

acquisition point coordinate system

$C_i$

defect detection coordinates

$p_1(x, y, z)$

$T^{C_r}_{C_i}$

reference point coordinate system

$C_r$

detection station 3D positioning camera coordinate system

$T^{C_d}_{C_r}$

$C_d$

defect transmission coordinates

$p_2(x, y, z)$

grinding station 3D positioning camera coordinate system

$C_p$

$O_p$

$T^{O_p}_{C_p}$

grinding robotic arm base coordinate system

$T^{C_p}_{C_d}$

Detection Station

grinding Station

FIG. 12

FIG. 13

FIG. 14

## INTERNATIONAL SEARCH REPORT

| International application No. |
|---|
| **PCT/CN2023/122793** |

**A. CLASSIFICATION OF SUBJECT MATTER**

B24B19/00(2006.01)i

According to International Patent Classification (IPC) or to both national classification and IPC

**B. FIELDS SEARCHED**

Minimum documentation searched (classification system followed by classification symbols)

IPC:B24B

Documentation searched other than minimum documentation to the extent that such documents are included in the fields searched

Electronic data base consulted during the international search (name of data base and, where practicable, search terms used)

CNTXT, ENTXTC, CNKI: 打磨, 导轨, 机器人, 机械臂, 机械手, 检测, 磨削, 喷漆, 喷涂, 漆面, 缺陷, 涂装; VEN, WOTXT, USTXT, EPTXT, JPTXT: defect, guideway, manipulator, rail, spray, paint, grind, detect, polish

**C. DOCUMENTS CONSIDERED TO BE RELEVANT**

| Category* | Citation of document, with indication, where appropriate, of the relevant passages | Relevant to claim No. |
|---|---|---|
| X | CN 114720475 A (HUNAN SHIBITE ROBOT CO., LTD.) 08 July 2022 (2022-07-08) description, specific embodiments, and figures 1-5 | 1-20 |
| X | CN 114720476 A (HUNAN SHIBITE ROBOT CO., LTD.) 08 July 2022 (2022-07-08) description, specific embodiments, and figures 1-5 | 1-20 |
| A | CN 114193278 A (WUHAN UNIVERSITY OF SCIENCE AND TECHNOLOGY) 18 March 2022 (2022-03-18) entire document | 1-20 |
| A | CN 115890408 A (XI'AN UNIVERSITY OF TECHNOLOGY) 04 April 2023 (2023-04-04) entire document | 1-20 |
| A | JP H05138088 A (MAZDA MOTOR CORP.) 01 June 1993 (1993-06-01) entire document | 1-20 |

☐ Further documents are listed in the continuation of Box C.　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2024** | **28 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/122793**

| Patent document cited in search report | | | Publication date (day/month/year) | Patent family member(s) | | | Publication date (day/month/year) |
|---|---|---|---|---|---|---|---|
| CN | 114720475 | A | 08 July 2022 | None | | | |
| CN | 114720476 | A | 08 July 2022 | None | | | |
| CN | 114193278 | A | 18 March 2022 | None | | | |
| CN | 115890408 | A | 04 April 2023 | None | | | |
| JP | H05138088 | A | 01 June 1993 | JP | 3199320 | B2 | 20 August 2001 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321536359

- CN 202310713173